Europäisches Patentamt

European Patent Office

Office européen des brevets

(19)

(11) Veröffentlichungsnummer: **0 192 045**

**A1**

(12) # EUROPÄISCHE PATENTANMELDUNG

(21) Anmeldenummer: **86100512.2**

(22) Anmeldetag: **16.01.86**

(51) Int. Cl.⁴: **F 28 F 19/02**
**F 16 L 58/14, C 23 D 5/00**
**F 28 F 9/04**

(30) Priorität: 19.01.85 DE 3501656

(43) Veröffentlichungstag der Anmeldung:
27.08.86 Patentblatt 86/35

(84) Benannte Vertragsstaaten:
AT BE CH DE FR GB IT LI LU NL SE

(71) Anmelder: Reininger, Nikolaus
Otto-Bödecker-Strasse 16
D-3160 Lehrte(DE)

(71) Anmelder: Reininger, geb. Strey, Ursula
Otto-Bödecker-Strasse 16
D-3160 Lehrte(DE)

(72) Erfinder: Reininger, Nikolaus
Otto-Bödecker-Strasse 16
D-3160 Lehrte(DE)

(72) Erfinder: Reininger, geb. Strey, Ursula
Otto-Bödecker-Strasse 16
D-3160 Lehrte(DE)

(74) Vertreter: Hammermann, Herbert
Schlegelstrasse 25
D-8500 Nürnberg(DE)

(54) **Emailliertes Rohr für Hochdruckwärmetauscher.**

(57) Die Erfindung betrifft ein nahtloses mit Emaille überzogenes Stahlrohr (1) für Hochdruckwärmetauscher, das zur Schonung des Emailleüberzuges (6) beim Kuppeln (8) der Rohre (1) an den Enden von der Emaille befreit ist.

Fig. 2

Croydon Printing Company Ltd.

EP 0 192 045 A1

0192045

Ursula und Nikolaus Reininger

Otto-Bödecker-Straße 16, 3160 Lehrte

## Emailliertes Rohr für Hochdruckwärmetauscher

Die Erfindung betrifft emaillierte Rohre für Hochdruckwärmetauscher, die sich durch Unempfindlichkeit beim Zusammenbau der Rohrschlangen und während des Betriebes auszeichnen.

Es ist bereits in der japanischen Patentschrift No.: JP 57-60194 (A) vorgeschlagen worden, Rippenrohre zur Vermeidung ungünstiger Einflüsse durch den Sauerstofftaupunkt zu emaillieren und dabei die Enden des Rohres um einen kurzen Betrag emaillefrei zu lassen. Es mag dahingestellt bleiben, ob die beim Emaillieren von Rippenrohren auf der Oberfläche auftretenden zahlreichen Haarrisse gegenüber der bei dem Taupunkt auftretenden Einflüssen des Sauerstoffes eine Einwirkung haben. Bei der Verwendung von Emaillierohren für Hochdruckaustauscher müssen die Rohre auch noch sicher gegen weit aktivere Stoffe wie Schwefelsäure standhalten, was bei emaillierten Rippenrohren wegen deren vielen Haarrisse nicht zu erwarten ist.

Der Erfindung liegt die Aufgabe zugrunde, diesen Mangel auf möglichst einfache Weise zu beheben.

Die Aufgabe wird gelöst durch die Verwendung glatter, nahtloser Stahlrohre, deren Emaillierung so weit vor den Enden aufhört, daß die Emailleschicht durch das Anbringen der üblichen Rohrverbindungen nicht beeinträchtigt wird.

Nahtlos gezogene Stahlrohre haben eine ringsum glatte Oberläche, die ohne Schwierigkeiten durch bekannte elektrische Messgeräte auf etwa doch noch vorhandene Haarrisse in der Emailleschicht geprüft werden kann und beim Nachweis solcher Risse als unbrauchbar ausgeschieden werden, um beispielsweise eine Garantie von 10 Jahren sicheren Schutz gegen säurereiche Abgase zu erreichen, wie das bei Hochdruckwärmeaustauschern heute gefordert wird. Es bleibt in diesem Falle nur noch die Gefahr, daß durch wenig sorgfältiges Kuppeln der einzelnen Rohre Haarrisse in der nächstliegenden Emailleschicht hervorgerufen werden könnten. Das wird nach der Erfindung mit Sicherheit dadurch vermieden, daß man grundsätzlich die vor den Rohrenden liegende emaillefreie Schicht genügend groß ausführt und lieber durch eine besondere Schutzwand die emaillefreien Teile sowie die Kupplungen vor dem Einfluß aggressiver Rauchgase schützt.

Die Zeichnung gibt ein emailliertes nahtloses Stahlrohr nach der Erfindung beispielsweise wieder, und zwar zeigt:

Fig. 1 das Rohr im Längsschnitt und etwa im Maßstab 1:2.

Fig. 2 eine Rohrgruppe nach der Efindung in einer Heizanlage und teilweise im Längsschnitt.

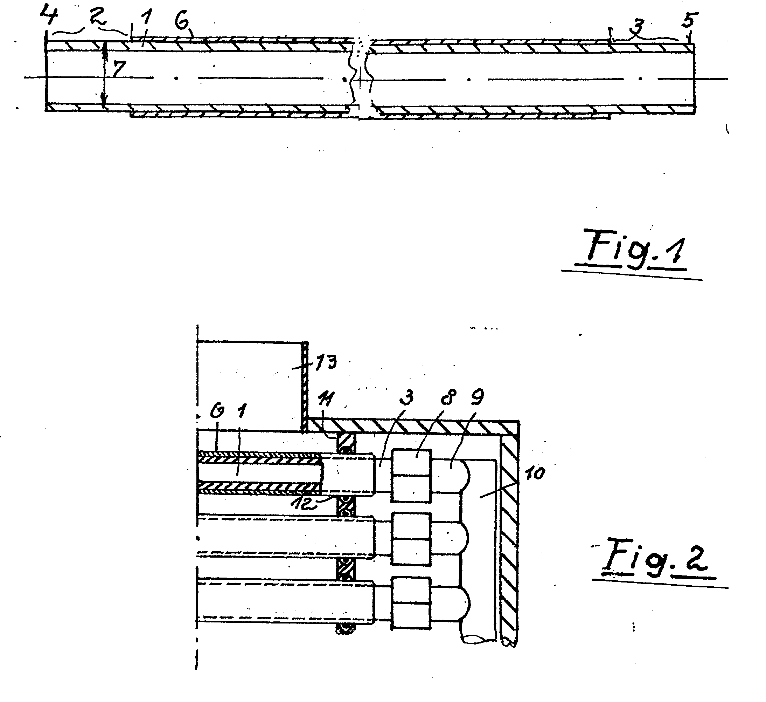

Ein Stahlrohr 1 ist nach der Erfindung nur bis zu einer Länge 2,3 vor den Enden des Rohres 4,5 mit Emaille überzogen. Nimmt man ein Rohr von 35 mm Außendurchmesser an, so ergibt das bei dem Rohr nach Fig. 1 eine emaillefreie Länge von etwa 4 cm, die erfahrungsgemäß ausreichen, um die notwendigen Bearbeitungen der Rohrenden mittels Schweißen oder Verschrauben zur Herstellung einer Rohrschlange durchzuführen, ohne daß eine Beeinträchtigung
der vor dem Ende beginnenden Emailleschicht zu erwarten
ist.

In dem Ausführungsbeispiel nach Fig. 2 sind an die Rohrenden 2,3 Muffen 8 angeschraubt bzw. angeschweißt, welche in eine Abzweigung 3 eines Sammelrohres 10 enden.
Eine Kunststoffwand 11 mit Bohrungen 12 für die Aufnahme der Wärmeaustauscherrohre 1 sorgt dafür, daß die mit
Schadstoffen angereicherten Abgase nicht an die emaillefreien Verschraubungen 8 oder an das Sammelrohr 10 gelangen können. Mit 13 ist das Abgasrohr bezeichnet, welches die Abgase quer zu den Austauscherrohren beispielsweise in Umkehrrichtung durchkreuzen.

Ursula und Nikolaus Reininger

Otto-Bödecker-Straße 16,   3160 Lehrte


Emailliertes Rohr für Hochdruckwärmetauscher


P a t e n t a n s p r u c h


Emailliertes Rohr mit emaillefreien Enden, für Hochdruckwärmeaustauscher,

g e k e n n z e i c h n e t   d u r c h

die Verwendung glatter, nahtloser Stahlrohre (1), deren
Emaillierung (6) so weit vor den Enden aufhört (2,3),
daß die Emailleschicht durch das Anbringen der üblichen
Rohrverbindungen (8) nicht beeinträchtigt wird.

0192045

1/1

*Fig.1*

*Fig.2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 268 989 (ERWIN) <br> * Spalte 1, Zeilen 11-27; Spalte 2, Zeilen 7-12,35-61; spalte 3, Zeilen 8-13,20-46; Figur 1 * | 1 | F 28 F 19/02 <br> F 16 L 58/14 <br> C 23 D 5/00 <br> F 28 F 9/04 |
| | --- | | |
| Y | GB-A-1 515 458 (I.H.J.K.K.) <br> * Seite 1, Zeilen 40-54; Seite 1, Zeile 93 - Seite 2, Zeile 5; Seite 2, Zeilen 34-37; Figuren 1-3 * | 1 | |
| | --- | | |
| Y | US-A-1 463 461 (DAVIS) <br> * Seite 1, Zeilen 56-68,86-90,95-105; Figuren 1,2 * | 1 | |
| | --- | | |
| A | GB-A-1 228 006 (TAKUMA) <br> * Seite 1, Zeilen 27-31; Seite 2, Zeilen 87-118; Figuren 1,2 * | 1 | RECHERCHIERTE SACHGEBIETE (Int Cl 4) |
| | --- | | |
| A | US-A-1 842 298 (SMITH) <br> * Seite 1, Zeilen 57-69,81-88; Figuren * | 1 | F 28 F <br> F 16 L <br> F 22 B |
| | --- | | |
| A | US-A-1 387 901 (PAYNE) | | |
| | --- | | |
| A | GB-A- 755 220 (REAVELL) | | |
| | ----- | | |

Der vorliegende Recherchenbericht wurde für alle Patentansprüche erstellt.

| Recherchenort <br> DEN HAAG | Abschlußdatum der Recherche <br> 22-04-1986 | Prüfer <br> KLEIN C. |
|---|---|---|